# EUROPÄISCHE PATENTANMELDUNG

(11) **EP 1 460 747 A1**
(43) Veröffentlichungstag der Anmeldung: **22.09.2004**
(21) Anmeldenummer: 04004320.0
(22) Anmeldetag: 26.02.2004
(51) Int. Cl.: H02K 5/173

(54) **Lagerungshalter und Gehäuse eines elektromotors**

(30) Priorität: 19.03.2003 DE 10312869
(71) Anmelder: MINEBEA CO., LTD., Kitasaku-gun, Nagano-ken (JP)
(72) Erfinder: Kuwert, Oswald, 79336 Tutschfelden (DE)
(74) Vertreter: Beck, Jürgen, Dr. Dipl.-Phys.

(57) **Zusammenfassung**

Um bei einem Elektromotor, insbesondere einem bürstenlosen Elektromotor, umfassend einen Rotor, einen Stator, ein den Rotor und den Stator aufnehmendes Motorgehäuse, ein am Motorgehäuse angeordnetes erstes Lager und ein dem ersten Lager gegenüberliegend angeordnetes zweites Lager; beim Einbau des Rotors in das Motorgehäuse die Lager mit der notwendigen Präzision positionieren zu können, wird vorgeschlagen, daß das Motorgehäuse einen den Stator aufnehmenden Gehäusekörper und einen das zweite Lager aufnehmenden am Gehäusekörper montierbaren Flanschkörper umfaßt, und daß der Flanschkörper in einer bezogen auf die Rotorachse axialen Endposition gegen eine Bewegung quer zur Rotorachse am Gehäusekörper geführt ist und mittels ersten am Flanschkörper vorgesehenen Formschlußeinheiten und zweiten am Gehäusekörper vorgesehenen Formschlußeinheiten, welche durch eine Relativbewegung von Flanschkörper und Gehäusekörper miteinander in Wirkverbindung bringbar sind, gegen eine Bewegung in Richtung der Rotorachse relativ zum Gehäusekörper festgelegt ist.

## Beschreibung

Die Erfindung betrifft einen Elektromotor, insbesondere einen bürstenlosen Elektromotor umfassend einen Rotor, einen Stator, ein den Rotor und den Stator aufnehmendes Motorgehäuse, ein am Motorgehäuse auf einer ersten Seite des Rotors angeordnetes erstes Lager und ein auf einer zweiten, der ersten Seite gegenüberliegenden Seite des Rotors angeordnetes zweites Lager zur drehbaren Lagerung des Rotors um eine Rotorachse.

Derartige Elektromotoren sind aus dem Stand der Technik bekannt.

Bei diesen besteht das Problem, beim Zusammenbau des Motors, insbesondere beim Einbau des Rotors in das Motorgehäuse, die Lager, insbesondere im Hinblick auf ihren Abstand in Richtung der Rotorachse, mit der notwendigen Präzision positionieren zu können.

Diese Aufgabe wird bei einem Elektromotor der eingangs beschriebenen Art erfindungsgemäß dadurch gelöst, daß das Motorgehäuse einen den Stator aufnehmenden Gehäusekörper und einen das zweite Lager aufnehmenden am Gehäusekörper montierbaren Flanschkörper umfaßt und daß der Flanschkörper in einer bezogen auf die Rotorachse axialen Endposition gegen eine Bewegung quer zur Rotorachse am Gehäusekörper geführt ist und mittels ersten, am Flanschkörper vorgesehenen Formschlußeinheiten und zweiten am Gehäusekörper vorgesehenen Formschlußeinheiten, welche durch eine Relativbewegung von Flanschkörper und Gehäusekörper miteinander in Wirkverbindung bringbar sind, gegen eine Bewegung in Richtung der Rotorachse relativ zum Gehäusekörper festgelegt ist.

Der Vorteil der erfindungsgemäßen Lösung ist darin zu sehen, daß mit dieser die Möglichkeit besteht, beim Zusammenbau des Motorgehäuses das zweite Lager einerseits einfach am Gehäusekörper zu montieren und andererseits relativ zum ersten Lager in einer für eine präzise Lagerung und Führung des Rotors erforderlichen Position anzuordnen.

Insbesondere ist die erfindungsgemäße Lösung dann vorteilhaft, wenn die Lager relativ zueinander mit einem elastischen Kraftspeicher vorgespannt, das heißt in Richtung aufeinander zu beaufschlagt, am Motorgehäuse montierbar sein sollen.

Hinsichtlich der Ausbildung der Formschlußeinheiten selbst sind die unterschiedlichsten Möglichkeiten denkbar.

Beispielsweise könnten die beiden Formschlußeinheiten zusammenwirkende Gewinde sein.

Eine besonders günstige Lösung sieht vor, daß die Formschlußeinheiten derart ausgebildet sind, daß sie durch eine Relativbewegung zueinander in Richtung der Rotorachse in Eingriff miteinander bringbar sind.

Weiterhin ist günstigerweise vorgesehen, daß die Formschlußeinheiten derart ausgebildet sind, daß sie durch eine Drehbewegung relativ zueinander um die Rotorachse gegen eine Bewegung in Richtung der Rotorachse relativ zueinander festlegbar sind.

Eine gängige Ausbildung derartiger Formschlußeinheiten sieht vor, daß diese in der Art eines Bajonettverschlusses zusammenwirken.

Hinsichtlich einer möglichst einfachen Herstellung derartiger Formschlußeinheiten sieht eine vorteilhafte Lösung vor, daß die einen Formschlußeinheiten durch Bahnfolger und die anderen Formschlußeinheiten durch Führungsbahnen für die Bahnfolger gebildet sind.

Bei der erfindungsgemäßen Lösung könnten prinzipiell die Formschlußeinheiten so ausgebildet sein, daß mit diesen verschiedene axiale Endpositionen des Flanschkörpers relativ zum Gehäusekörper festlegbar sind.

Besonders günstig ist es jedoch, wenn mit dem Formschlußeinheiten eine einzige axiale Endposition des Flanschkörpers relativ zum Gehäusekörper festlegbar ist.

Besonders günstig ist es, wenn die Formschlußeinheiten derart ausgebildet sind, daß der Flanschkörper in der axialen Endposition ohne Veränderung dieser axialen Endposition relativ zum Gehäusekörper verdrehbar ist.

Um beim Montieren des Flanschkörpers die axiale Endposition möglichst einfach erreichen zu können, ist der Flanschkörper durch parallel zur Rotorachse wirksame Führungselemente geführt in die axiale Endposition bringbar.

Hinsichtlich der Anordnung des Flanschkörpers relativ zum Gehäusekörper wurden bislang keine näheren Angaben gemacht. Beispielsweise könnte die Ausbildung derart sein, daß der Flanschkörper an eine Seite des Gehäusekörpers, beispielsweise in der Art einer diese Seite übergreifenden Abdeckung, ansetzbar ist.

Eine konstruktiv besonders günstige Lösung sieht vor, daß der Flanschkörper in eine Öffnung des Gehäusekörpers einsetzbar ist.

Bei einer derartigen Lösung lassen sich die Führungselemente besonders vorteilhaft dadurch ausbilden, daß sie durch eine Mantelfläche des Flanschkörpers und eine dem Flanschkörper zugewandte Innenfläche der Öffnung gebildet werden.

Außerdem besteht die Möglichkeit, die zweiten Formschlußeinheiten so auszubilden, daß diese an der den Flanschkörper aufnehmenden Öffnung des Gehäusekörpers angeordnet sind.

Vorzugsweise sind dabei die Formschlußeinheiten im Bereich einer dem eingesetzten Flanschkörper zugewandten Innenfläche der Öffnung im Gehäusekörper angeordnet.

Bei dieser Lösung besteht ferner die Möglichkeit, die ersten Formschlußeinheiten so auszubilden, daß sie an einer der Öffnung zugewandten Seite des Flanschkörpers angeordnet sind.

Vorzugsweise sind in diesem Fall die ersten Formschlußeinheiten an der Mantelfläche des Flanschkörpers angeordnet.

Im Zusammenhang mit der Ausbildung des Gehäusekörpers derart, daß der Flanschkörper in eine Öffnung desselben einsetzbar ist, wurden bislang keine näheren Angaben zur Funktion der Öffnung gemacht. Beispielsweise könnte die Öffnung lediglich eine Öffnung einer im Gehäusekörper vorgesehenen Ausnehmung zur Aufnahme des Flanschkörpers sein.

Eine besonders zweckmäßige Lösung, die insbesondere beim Zusammenbau des erfindungsgemäßen Elektromotors Vorteile bietet, sieht vor, daß die Öffnung eine Zugangsöffnung für einen Innenraum des Gehäuses ist, so daß die Öffnung gleichzeitig dazu benutzt werden kann, beim Zusammenbau des Elektromotors Zugang zu dem Innenraum des Gehäusekörpers zu erhalten.

In diesem Zusammenhang ist es besonders zweckmäßig, wenn die Öffnung in dem Gehäusekörper derart dimensioniert ist, daß durch diese der Rotor in das Motorgehäuse einsetzbar ist.

Insbesondere dann, wenn der Rotor durch zwei in Richtung auf einanderzu beaufschlagte Lager in dem Motorgehäuse gelagert werden soll, ist bei einem bevorzugten Ausführungsbeispiel der erfindungsgemäßen Lösung vorgesehen, daß das zweite Lager über ein federelastisches Element an dem Flanschkörper in axialer Richtung abgestützt ist, so daß bei Erreichen der axialen Endposition des Flanschkörpers das federelastische Element vorgespannt ist und mit dieser Vorspannung das zweite Lager in Richtung des ersten Lagers beaufschlagt.

Eine derartige Lösung läßt sich besonders günstig dadurch realisieren, daß der Flanschkörper eine Aufnahme für das zweite Lager aufweist, in welcher das zweite Lager in axialer Richtung zur Rotorachse relativ zum Flanschkörper bewegbar ist.

Die Aufnahme für das zweite Lager könnte eine am Flanschkörper zusätzlich angeordnete Aufnahme sein.

Eine konstruktiv besonders einfache Lösung sieht vor, daß die Aufnahme für das zweite Lager als im Flanschkörper vorgesehene Vertiefung ausgebildet ist.

Im Zusammenhang mit der bisherigen Beschreibung von Ausführungsbeispielen des erfindungsgemäßen Elektromotors wurde nicht näher darauf eingegangen, wo ein Sensor angeordnet werden kann, mit welchem die Drehbewegungen und Drehstellungen des Rotors erfaßt werden sollen.

Aus diesem Grund sieht ein besonders vorteilhaftes Ausführungsbeispiel vor, daß auf einer dem Rotor zugewandten Seite des Flanschkörpers mindestens ein Drehbewegungen des Rotors erfassender Sensor angeordnet ist.

Eine derartige Anordnung des Sensors verbessert die Montagefreundlichkeit des erfindungsgemäßen Elektromotors.

Der Sensor könnte prinzipiell jede Art von Sensor sein, mit welchem sich die Drehbewegungen des Rotors erfassen lassen. Eine besonders günstige Lösung sieht vor, daß der mindestens eine Sensor als Sensormagneten des Rotors zugewandter Magnetfeldsensor ausgebildet ist, wobei ein derartiger Magnetfeldsensor beispielsweise ein Hallsensor oder magnetoresistiver Sensor ist.

Die Anordnung eines derartigen Sensors könnte beispielsweise am Gehäusekörper erfolgen.

Eine besonders günstige Lösung sieht vor, daß auf einer dem Rotor zugewandten Seite des Flanschkörpers eine Sensorplatine mit dem mindestens einen Sensor angeordnet ist.

Eine derartige Sensorplatine könnte beispielsweise in den Gehäusekörper eingelegt sein. Besonders günstig ist es jedoch, wenn die Sensorplatine mindestens mit dem Flanschkörper mitdrehbar ist und somit durch Drehung des Flanschkörpers die Möglichkeit besteht, die Sensorplatine hinsichtlich ihrer Drehstellung relativ zum Stator und Rotor zu justieren.

Besonders günstig läßt sich die Sensorplatine justieren und positionieren, wenn die Sensorplatine fest mit dem Flanschkörper verbunden ist, da damit durch die axiale Endposition des Flanschkörpers auch gleichzeitig die axiale Endposition der Sensorplatine definiert festlegbar ist.

Vorzugsweise ist dabei die Sensorplatine über Formschlußelemente mit dem Flanschkörper verbunden.

Um die Sensorplatine möglichst nahe am Rotor anordnen zu können und andererseits eine günstige Aufnahme für das zweite Lager am Flanschkörper realisieren zu können, ist vorzugsweise vorgesehen, daß das zweite Lager auf einer dem Rotor abgewandten Seite der Sensorplatine am Flanschkörper angeordnet ist.

Die Montagefreundlichkeit des erfindungsgemäßen Elektromotors setzt ferner voraus, daß in einfacher Weise eine elektrische Verbindung von außen zur Sensorplatine geschaffen werden kann. Dies läßt sich besonders günstig dadurch realisieren, daß ein von der Sensorplatine wegführendes Kabel durch eine Ausnehmung im Flanschkörper geführt ist.

Um dieses Kabel in einfacher Weise bei der Montage der Sensorplatine am Flanschkörper in die Ausnehmung einbringen zu können, ist vorzugsweise vorgesehen, daß die Ausnehmung zu einer Außenseite des Flanschkörpers hin offen ist.

Bei den bislang beschriebenen Ausführungsformen des erfindungsgemäßen Elektromotors ist nichts darüber ausgesagt, inwieweit der Flanschkörper relativ zum Gehäusekörper in der axialen Endposition nach Justieren des mindestens einen Sensors fixiert wird.

Um die durch Drehen des Flanschkörpers beispielsweise erreichbare Justierung des mindestens einen Sensors aufrechtzuerhalten, ist vorzugsweise vorgesehen, daß der Flanschkörper mit dem Gehäusekörper fest verbindbar ist, wobei eine derartige feste Verbindung zwischen dem Flanschkörper und dem Gehäusekörper in unterschiedlicher Weise realisierbar ist.

Eine besonders einfache Lösung sieht vor, daß die feste Verbindung zwischen dem Flanschkörper und dem Gehäusekörper durch eine Klebung erfolgt. Es wäre aber auch denkbar, Schraubverbindung oder ähnliche Verbindungen vorzusehen, die die Position des Flanschkörpers zum Gehäusekörper dauerhaft festlegen.

Ferner wurde hinsichtlich der Anordnung des ersten Lagers am Gehäusekörper keine näheren Angaben gemacht. So ist es besonders günstig, wenn der Gehäusekörper auf einer dem Flanschkörper gegenüberliegenden Seite einen das erste Lager aufnehmenden Lagerflansch aufweist.

Dieser Lagerflansch könnte seinerseits separat am Gehäusekörper montierbar sein.

Die erfindungsgemäße Lösung ist jedoch besonders kostengünstig realisierbar, wenn der Lagerflansch einstückig mit dem Gehäusemantel des Gehäusekörpers verbunden ist, so daß beim Zusammenbau des erfindungsgemäßen Elektromotors lediglich mit den erfindungsgemäßen Maßnahmen eine exakte Positionierung des zweiten Lagers relativ zum Gehäusekörper erreicht werden muß.

Bei einer herstellungstechnisch günstigen Version des erfindungsgemäßen Elektromotors ist vorgesehen, daß der Gehäusekörper aus einer den Stator einbettenden ausgehärteten Masse gebildet ist, so daß sich die Form des Gehäusekörper selbst durch einfache Produktionsprozesse, wie ein Gießen der aushärtenden Masse in eine Form oder Einspritzen der aushärtenden Masse in einer Form, herstellen läßt.

Weitere Merkmale und Vorteile der Erfindung sind Gegenstand der nachfolgenden Beschreibung sowie der zeichnerischen Darstellung einiger Ausführungsbeispiele. In der Zeichnung zeigen:
- Fig. 1: einen Längsschnitt durch einen erfindungsgemäßen Elektromotor in zusammengebautem Zustand;
- Fig. 2: eine Explosionsdarstellung des erfindungsgemäßen Elektromotors vor einem Einbau eines Rotors und eines Flanschkörpers;
- Fig. 3: einen Schnitt längs Linie 3-3 in Fig. 1;
- Fig. 4: eine nochmals vergrößerte Explosionsdarstellung eines Flanschkörpers vor einem Einbau eines zweiten Lagers und einer Sensorplatine und
- Fig. 5: eine perspektivische Darstellung eines mit der Sensorplatine und dem zweiten Lager versehenen Flanschkörpers.

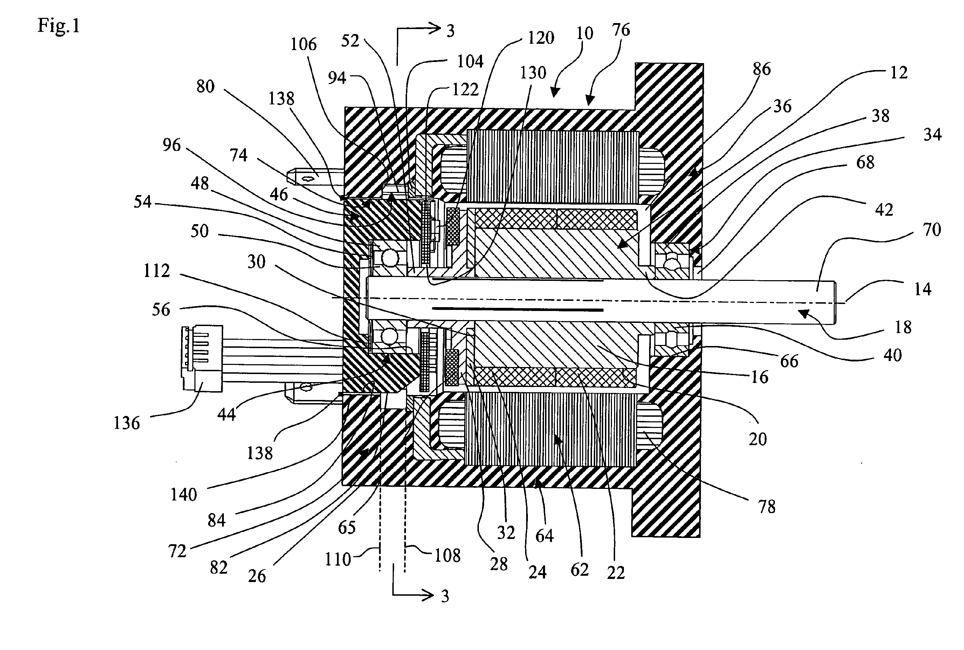

Ein Ausführungsbeispiel eines erfindungsgemäßen bürstenlosen Elektromotors umfaßt, wie in Fig. 1, 2 und 3 dargestellt, ein Motorgehäuse 10, in welchem ein als Ganzes mit 12 bezeichneter Rotor um eine Rotorachse 14 drehbar gelagert ist.

Der Rotor 12 wird dabei gebildet durch einen Rotorkörper 16, welcher auf einer koaxial zur Rotorachse 14 drehbaren Rotorwelle 18 sitzt und an einer Außenfläche 20 angeordnete Magnetpole 22, 24 trägt, die üblicherweise als Magnetpolpaare auf dem Rotorkörper 16 angeordnet sind, wobei der Rotorkörper 16 einen Rückschlußkörper für die Magnetpole 22, 24 bildet.

Ferner ist der Rotor 12 mit einer Sensormagnetscheibe 26 versehen, die ihrerseits auf einem Rückschlußkörper 28 sitzt, welcher ebenfalls auf der Rotorwelle 18 angeordnet ist und beispielsweise vor einer rückwärtigen Stirnseite 30 des Rotorkörpers 16 angeordnet ist, wobei zwischen dem Rückschlußkörper 28 und dem Rotorkörper 16 sowie den Magnetpolen 24 ein Abschirmring 32 zusätzlich vorgesehen ist.

Der Rückschlußkörper 28 und die Sensormagnetscheibe 26 weisen dabei eine radiale Erstreckung auf, die maximal der radialen Erstreckung der Magnetpole 22, 24 relativ zur Rotorachse 14 entspricht.

Die Lagerung des Rotors 12 erfolgt, wie in Fig. 1 dargestellt, über ein erstes Lager 34, welches in einem frontseitigen Lagerflansch 36 des Motorgehäuses 10 mit einem Lageraußenring 38 gehalten ist, während ein Lagerinnenring 40 auf der Rotorwelle 18 sitzt. Ferner liegt der Lagerinnenring 40 des ersten Lagers an einem sich hülsenähnlich von dem Rotorkörper 16 ausgehend erstreckenden Fortsatz 42 an und stützt somit den Rotor 12 auch in Richtung parallel zur Rotorachse 14 ab.

Ferner ist der Rotor 12 auf einer dem ersten Lager 34 gegenüberliegenden Seite durch ein zweites Lager 44 drehbar im Motorgehäuse 10 gelagert, welches in einem nachfolgend näher zu beschreibenden Flanschkörper 46 des Motorgehäuses 10 angeordnet ist, der auf einer dem frontseitigen Lagerflansch 36 gegenüberliegenden Seite des Motorgehäuses 10 angeordnet ist. Dabei weist das zweite Lager 44 einen Lageraußenring 48 und einen Lagerinnenring 50 auf, wobei der Lagerinnenring 50 ebenfalls auf der Rotorwelle 18 sitzt. An dem Lagerinnenring 50 stützt sich ein hülsenähnlicher Fortsatz 52 ab, welcher beispielsweise als Fortsatz 52 des Rückschlußkörpers 28 der Sensormagnetscheibe 26 ausgebildet ist und sich von der rückwärtigen Stirnseite 30 des Rotorkörpers 16 bis zum Lagerinnenring 50 erstreckt.

Dadurch, daß sich der hülsenähnliche Fortsatz 52 an dem Rotorkörper 16 abstützt und der Rotorkörper 16 seinerseits den hülsenähnlichen Fortsatz 42 aufweist, der an dem Lagerinnenring 40 des ersten Lagers 34 anliegt, sind durch den Rotor 12 die Lagerinnenringe 40 und 50 in Richtung der Rotorachse 14 mit einem fest vorgegebenen Abstand positioniert.

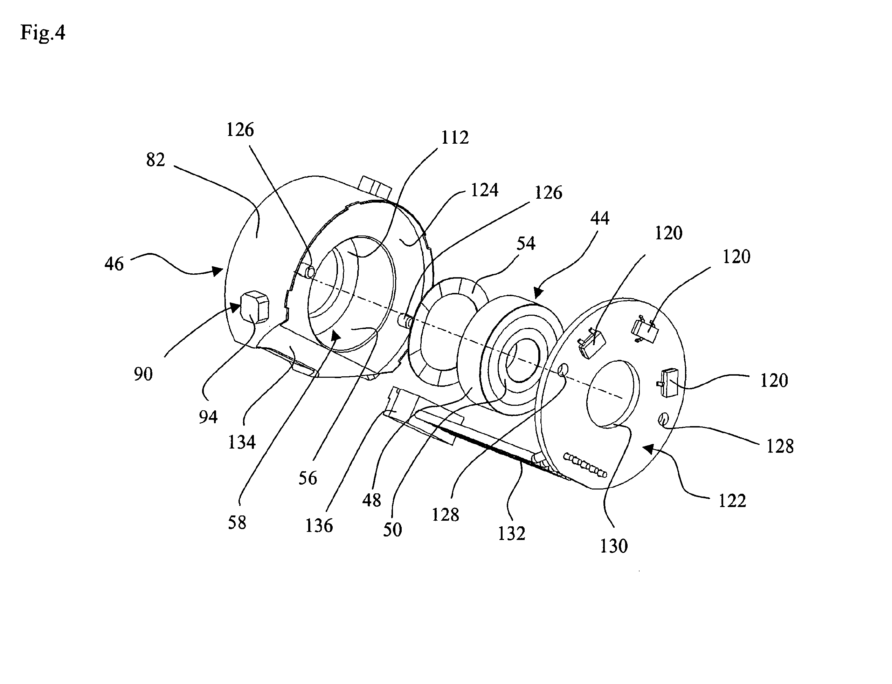

Ferner wird vorzugsweise eines der Lager 34, 44, beispielsweise das zweite Lager 44, durch einen federelastischen Ring 54 in Richtung parallel zur Rotorachse 14 beaufschlagt, welcher sich einerseits an dem Flanschkörper 46 und andererseits an dem Lageraußenring 48 des zweiten Lagers 44 abstützt, wobei der Lageraußenring 48 hierzu in Richtung der Rotorachse 14 verschiebbar in einer zylindrischen Lageraufnahme 56 des Flanschkörpers 46, ausgebildet als im Flanschkörper 46 angeordnete, zum Rotorkörper 16 hin offene Vertiefung 58 (Fig. 4) in diesem, jedoch stets zentriert zur Rotorachse 14 ausgerichtet geführt ist, so daß durch den federelastischen Ring 54 beide Lager 34, 44 in Richtung parallel zur Rotorachse 14 eine ständige Beaufschlagung mit einer Kraft erfahren und damit im wesentlichen spielfrei laufen.

In dem Motorgehäuse 10 ist ferner ein um den Rotor 12 herum angeordneter Stator 62 gehalten, wobei das Motorgehäuse 10 vorzugsweise aus einer ausgehärteten Einbettmasse 65 aus Kunststoff gebildet ist, in welche der Stator 62 eingebettet ist.

Die Einbettmasse 65 bildet ferner einen den Stator 62 radial außen umschließenden Gehäusemantel 64 sowie den vorzugsweise einstückig an den Gehäusemantel 64 angeformten frontseitigen Lagerflansch 36 mit einer Aufnahme 66 für das erste Lager 34 und einem Durchbruch 68, durch welchen die Rotorwelle 18 mit einem frontseitigen Ende 70 herausragt.

An den Gehäusemantel 64 ist ferner auf einer dem frontseitigen Lagerflansch 36 gegenüberliegenden Seite eine Flanschkörperaufnahme 72 angeformt, welche den Flanschkörper 46 dadurch aufnimmt, daß der Flanschkörper 46 in eine Öffnung 74 der Flanschkörperaufnahme 72 einsetzbar ist.

Die Flanschkörperaufnahme 72, der Gehäusemantel 64 und der frontseitige Lagerflansch 36 bilden insgesamt einen zusammenhängenden einstückigen Gehäusekörper 76, welcher den Durchbruch 68 für das frontseitige Ende 70 der Rotorwelle 18 und die Öffnung 74 als einzige Öffnungen aufweist, von denen die Öffnung 74 durch den in diese einsetzbaren Flanschkörper 46 verschließbar ist, so daß bei in die Öffnung 74 eingesetztem Flanschkörper 46 das Motorgehäuse 10 bis auf den Durchbruch 68 allseits geschlossen ist.

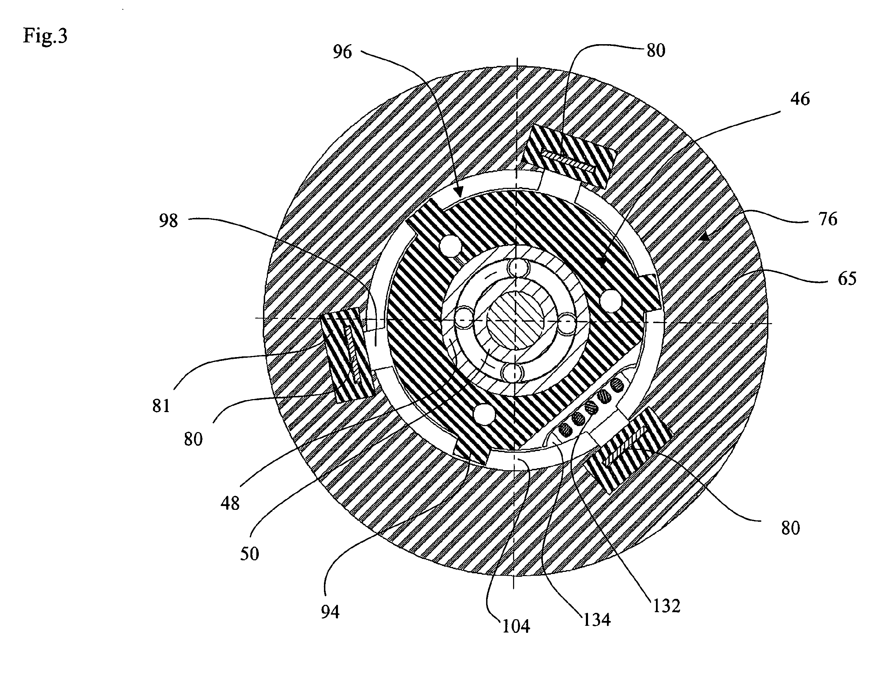

Zur Stromversorgung von Wicklungen 78 des Stators 62 sind aus dem Motorgehäuse 10, vorzugsweise im Bereich der Flanschkörperaufnahme 72 Wicklungsanschlüsse 80, beispielsweise in Form von über die Flanschkörperaufnahme 72 überstehenden Anschlußfahnen, vorgesehen, wobei die Wicklungsanschlüsse 80 sowie zwischen den Wicklungsanschlüssen 80 und den Wicklungen 78 verlaufende Zuleitungen ebenfalls in die Flanschkörperaufnahme 72 durch eine Einbettmasse 81 eingebettet sind (Fig. 3).

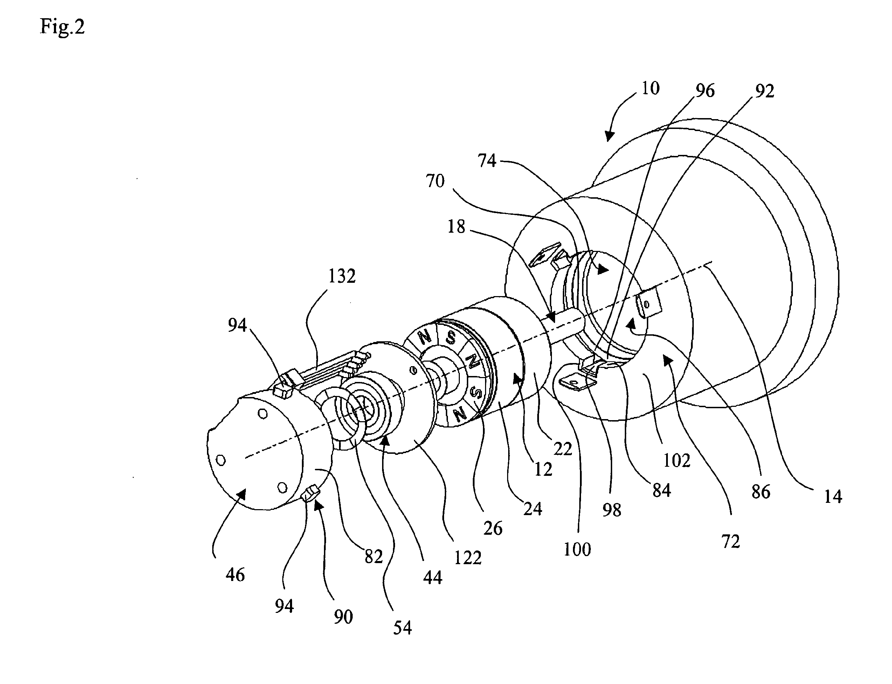

Der Flanschkörper 46 ist, wie in Fig. 1 und 2 dargestellt, vorzugsweise als Körper mit einer zur Rotorachse 14 koaxialen zylindrischen Mantelfläche 82 ausgebildet, welche an einer ebenfalls zur Rotorachse 14 des Elektromotors koaxial verlaufenden zylindrischen Innenfläche 84 der Öffnung 74 anlegbar ist, wobei der Flanschkörper 46 durch die Mantelfläche 82 und die Innenfläche 84, die beide als Führungselemente wirken, koaxial zur Rotorachse 14 geführt in die Öffnung 74 der Flanschkörperaufnahme 72 einführbar ist.

Wie in Fig. 2 dargestellt, hat die Öffnung 74 zur Aufnahme des Flanschkörpers 46 radial zur Rotorachse 14 gesehen einen derartigen Durchmesser, daß durch die Öffnung 74 der gesamte Rotor 12 in einen Innenraum 86 des Motorgehäuses 10 von seiten der Flanschkörperaufnahme 72 aus einführbar ist, wobei das frontseitige Ende 70 der Rotorwelle 18 durch den Durchbruch 68 im frontseitigen Lagerflansch 36 von dem Innenraum 86 des Motorgehäuses 10 nach außen hin durchschiebbar ist und dabei den Lagerinnenring 40 des ersten Lagers 34 durchsetzt.

Zur Fixierung des Flanschkörpers 46 in der Öffnung 74 der Flanschkörperaufnahme 72 sind der Flanschkörper 46 mit ersten Formschlußeinheiten 90 und die Flanschkörperaufnahme 72 mit zweiten Formschlußeinheiten 92 versehen.

Die ersten Formschlußeinheiten 90 sind dabei beispielsweise über die Mantelfläche 82 radial überstehende Zapfen 94, während die zweiten Formschlußeinheiten 92 Aufnahmen für die Zapfen 94 bilden, und zwar eine ringförmig um die Rotorachse 14 um die Öffnung 74 umlaufende und gegenüber der Innenfläche 84 vertieft angeordnete Ringnut 96, von welcher ausgehend Einführungsnuten 98 parallel zur Rotorachse 14 verlaufen, welche einerseits ebenfalls zur Innenfläche 84 hin offen sind und andererseits eine Einführungsöffnung 100 auf einer Rückseite 102 der Flanschkörperaufnahme 72 bilden, durch welche die Zapfen 94 zunächst in die Einführungsnuten 98 und dann von den Einführungsnuten 98 in die Ringnut 96 einführbar sind.

Die Zapfen 94 haben dabei in Richtung der Rotorachse 14 eine derartige Ausdehnung, daß diese im wesentlichen exakt geführt zwischen einander gegenüberliegenden Seitenwänden 104 und 106 der Ringnut 96 liegen und somit erfolgt durch die Ringnut 96 über die Zapfen 94 eine in Richtung der Rotorachse 14 exakte Positionierung des Flanschkörpers 46 relativ zum Gehäusekörper 76 in seiner bezogen auf die Rotorachse 14 axialen Endposition (Fig. 1 und 3).

Vorzugsweise bilden die Seitenwände 104 und 106 in zueinander parallelen Ebenen 108 und 110 liegende Führungsflächen, wobei bei senkrechtem Verlauf der Ebenen 108 und 110 zur Rotorachse 14 ein Bewegen der Zapfen 94 in der Ringnut 96 - abgesehen vom Einführvorgang der Zapfen 94 in die Ringnut 96 - zu keiner Verschiebung des Flanschkörpers 46 in Richtung der Rotorachse 14 führt, so daß der Flanschkörper 46 unter Aufrechterhaltung seiner axialen Endposition relativ zur Rotorachse 14 hinsichtlich seiner Drehstellung relativ zur Flanschkörperaufnahme 72 justierbar ist (Fig. 1 und Fig. 3).

Durch die exakte axiale Endposition des Flanschkörpers 46 relativ zum Gehäusekörper 76 ist auch der federelastische Ring 54, welcher sich an einer Ringfläche 112 des Flanschkörpers 46 abstützt, derart exakt positionierbar, daß dieser den Lageraußenring 48 des zweiten Lagers 44 mit einer im wesentlichen gleichbleibenden Kraft beaufschlagt, um somit die Einheit umfassend das zweite Lager 44, den Rotor 12 und das erste Lager 34 mit dieser Kraft in Richtung der Rotorachse 14 beaufschlagt im Motorgehäuse 10 zu halten.

Die zusätzlich zur bezüglich der Rotorachse 14 exakten axialen Endposition des Flanschkörpers 46 erforderliche Drehbarkeit desselben relativ zur Aufnahme 72 ist erforderlich, um Magnetfeldsensoren 120 auf einer Sensorplatine 122 gegenüber dem Stator 62 und dem Rotor 12 exakt positionieren zu können, wobei die Sensorplatine 122 auf einer dem Rotor 12 zugewandten Frontseite 124 des Flanschkörpers 46 aufliegt und von Positionierzapfen 126 des Flanschkörpers 46, welche in entsprechende Ausnehmungen 128 in der Sensorplatine 122 eingreifen, drehfest relativ zum Flanschkörper 46 gehalten ist.

Damit läßt sich die gesamte Sensorplatine 122 bei in die Flanschkörperaufnahme 72 eingesetztem Flanschkörper 46 in der axialen Endposition derart positionieren, daß die Magnetfeldsensoren 120 gegenüberliegend der Sensormagnetscheibe 26 in definiertem Abstand angeordnet sind, und durch Drehen um die Rotorachse 14 relativ zum Stator 62 exakt justieren, um Drehstellungen der Sensormagnetscheibe 26 und somit Drehstellungen des Rotors 12 relativ zum Motorgehäuse 10 exakt zu erfassen (Fig. 1).

Um auf der Sensorplatine 122 ausreichend Bauraum zur Verfügung zu haben, ist die Sensorplatine 122 mit einem zentralen Durchbruch 130 versehen, durch den die Rotorwelle 18 hindurchgreift, um den Lagerinnenring 50 des zweiten Lagers 44 zu durchsetzen, welches in der Lageraufnahme 56 sitzt, die sich als Vertiefung 58 von der Frontseite 124 ausgehend in den Flanschkörper 46 hineinerstreckt, so daß das zweite Lager 44 auf einer dem Rotorkörper 16 abgewandten Seite der Sensorplatine 122 angeordnet ist.

Zur elektrischen Kontaktierung der Sensorplatine 122 führt von dieser ausgehend ein Flachbandkabel 132 über eine entsprechende und zur Mantelfläche 82 hin offene Ausnehmung 134 im Flanschkörper 46 zu einem außerhalb des Motorgehäuses 10 liegenden Steckverbinder 136.

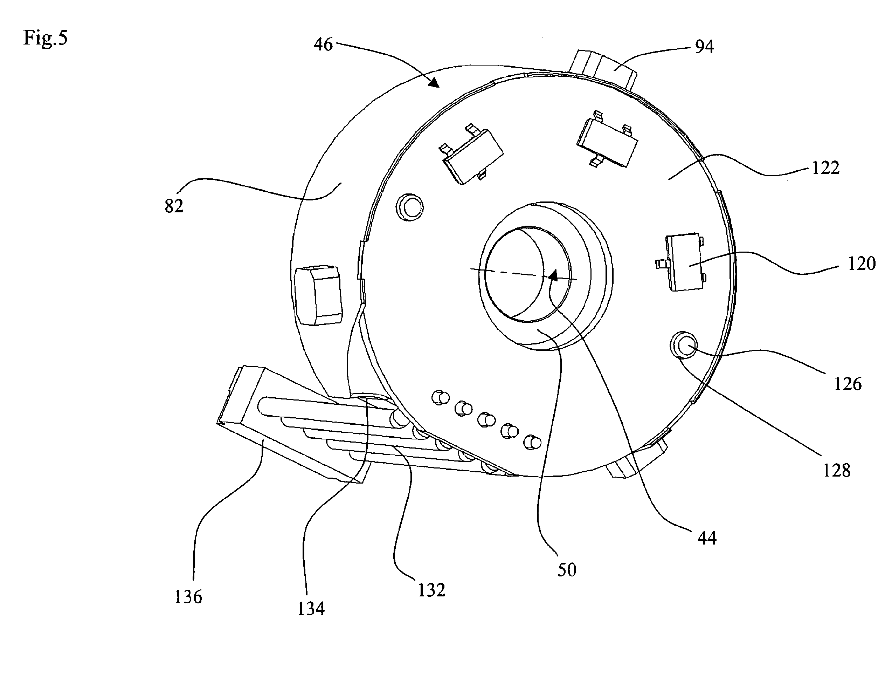

Beim Zusammenbau des erfindungsgemäßen Elektromotors wird der Flanschkörper 46 zunächst mit dem zweiten Lager 44 versehen, wobei zuerst der Federring 54 und dann das zweite Lager 44 in die Lageraufnahme 56 eingesetzt werden. Anschließend wird die Sensorplatine 122 drehfest am Flanschkörper 46 dadurch montiert, daß die Positionierzapfen 126 mit den Ausnehmungen 128 der Sensorplatine 122 in Eingriff gebracht werden und die Sensorplatine 122 auf der Frontseite 124 des Flanschkörpers 46 aufgelegt und fixiert wird. Ferner wird das Flachbandkabel 132 in die Ausnehmung 134 von einer Außenseite her eingelegt (Fig. 5).

Die zusammengebaute Einheit aus Flanschkörper 46, zweitem Lager 44 und Sensorplatine 122 mit den Magnetfeldsensoren 120 läßt sich vor Einführen des Rotors 12 in den Gehäusekörper 76 über die Öffnung 74 auf die Rotorwelle 18 derart aufsetzen, daß diese den Lagerinnenring 50 des zweiten Lagers 44 durchsetzt und somit bereits der Flanschkörper 46 koaxial zur Rotorwelle 18 ausgerichtet ist.

Der Rotor 12 läßt sich dann in der bereits beschriebenen Weise über die Öffnung 74 des Gehäusekörpers 76 in diesen einführen, wobei nach Einführen des Rotorkörpers 16 durch die Öffnung 74 in diese der Flanschkörper 46 eingeführt wird, der mit seiner Mantelfläche 82 durch die Innenfläche 84 der Flanschkörperaufnahme 72 zentriert zur endgültigen Position der Rotorachse 14 relativ zum Gehäusekörper 76 geführt wird, wobei gleichzeitig mit dem Einsetzen des Flanschkörpers 46 in die Öffnung 74 die Zapfen 94 durch die Einführungsöffnung 100 in die Einführungsnuten 98 eintreten, um über die Einführungsnuten 98 die Ringnut 96 zu erreichen.

Durch bajonettartiges Verdrehen der Zapfen 94 relativ zur Ringnut 96 erfolgt eine Festlegung des Flanschkörpers 46 in seiner axialen Endposition bezüglich der Rotorachse 14 und durch weiteres Drehen des Flanschkörpers 46 unter gleichzeitigem Mitdrehen der Sensorplatine 122 läßt sich diese mitsamt den Magnetfeldsensoren 120 in eine bestimmte Drehstellung relativ zum Stator 62 im Motorgehäuse 10 ausrichten, ohne daß die Position des Flanschkörpers 46 in Richtung der Rotorachse 14 verändert wird. Damit erfolgt eine endgültige Justage der Sensorplatine 122 durch das Drehen des Flanschkörpers 46 und eine endgültige Positionierung des Flanschkörpers 46 relativ zum Gehäusekörper 76 und somit auch zum Stator 62.

Anschließend kann dann ein Fixieren des Flanschkörpers 46 in der Flanschkörperaufnahme 72, beispielsweise durch Einbringen von Klebstoffmasse 138 in einen Spalt 140 zwischen der Mantelfläche 82 und der Innenfläche 84 erfolgen.

Außerdem kann auch eine Abdichtung im Bereich des die Ausnehmung 134 durchsetzenden Flachbandkabels 132 erfolgen, so daß ein hermetischer Abschluß des Motorgehäuses 10 im Bereich des Flanschkörpers 46 und des durchgeführten Flachbandkabels 132 unter gleichzeitiger dauerhafter Fixierung des Flanschkörpers 46 relativ zum Gehäusekörper 76 erfolgt (Fig. 1).

### BEZUGSZEICHENLISTE

- 10: Motorgehäuse
- 12: Rotor
- 14: Rotorachse
- 16: Rotorkörper
- 18: Rotorwelle
- 20: Außenfläche
- 22: Magnetpole
- 24: Magnetpole
- 26: Sensormagnetscheibe
- 28: Rückschlußkörper
- 30: rückwärtige Stirnseite von 16
- 32: Abschirmring
- 34: erstes Lager
- 36: frontseitiger Lagerflansch
- 38: Lageraußenring
- 40: Lagerinnenring
- 42: Fortsatz
- 44: zweites Lager
- 46: Flanschkörper
- 48: Lageraußenring
- 50: Lagerinnenring
- 52: Fortsatz
- 54: federelastischer Ring
- 56: Lageraufnahme
- 58: Vertiefung
- 62: Stator
- 64: Gehäusemantel
- 65: Einbettmasse
- 66: Aufnahme
- 68: Durchbruch
- 70: frontseitiges Ende
- 72: Flanschkörperaufnahme
- 74: Öffnung
- 76: Gehäusekörper
- 78: Wicklung
- 80: Wicklungsanschluß
- 81: Einbettmasse
- 82: Mantelfläche
- 84: Innenfläche
- 86: Innenraum
- 90: erste Formschlußeinheiten
- 92: zweite Formschlußeinheiten
- 94: Zapfen
- 96: Ringnut
- 98: Einführungsnuten
- 100: Einführungsöffnung
- 102: Rückseite
- 104: Seitenwand
- 106: Seitenwand
- 108: Ebenen
- 110: Ebenen
- 112: Ringfläche
- 120: Magnetfeldsensoren
- 122: Sensorplatine
- 124: Frontseite
- 126: Pos. Zapfen
- 128: Ausnehmungen
- 130: zentralerer Druchbr.
- 132: Flachbandkabel
- 134: Ausnehmung
- 136: Steckverbinder
- 138: Klebstoffmasse
- 140: Spalt

## Patentansprüche

1. Elektromotor, insbesondere bürstenloser Elektromotor, umfassend einen Rotor (12), einen Stator (62), ein den Rotor (12) und den Stator (62) aufnehmendes Motorgehäuse (10), ein am Motorgehäuse (10) auf einer ersten Seite des Rotors (12) angeordnetes erstes Lager (34) und ein auf einer zweiten der ersten Seite gegenüberliegenden Seite des Rotors (12) angeordnetes zweites Lager (44) zur drehbaren Lagerung des Rotors (12) um eine Rotorachse (14),
**dadurch gekennzeichnet, daß** das Motorgehäuse (10) einen den Stator (62) aufnehmenden Gehäusekörper (76) und einen das zweite Lager (44) aufnehmenden am Gehäusekörper (76) montierbaren Flanschkörper (46) umfaßt und daß der Flanschkörper (46) in einer bezogen auf die Rotorachse (14) axialen Endposition gegen eine Bewegung quer zur Rotorachse (14) am Gehäusekörper (76) geführt ist und mittels ersten am Flanschkörper (46) vorgesehenen Formschlußeinheiten (90) und zweiten am Gehäusekörper (76) vorgesehenen Formschlußeinheiten (92), welche durch eine Relativbewegung von Flanschkörper (46) und Gehäusekörper (76) miteinander in Wirkverbindung bringbar sind, gegen eine Bewegung in Richtung der Rotorachse (14) relativ zum Gehäusekörper (76) festgelegt ist.

2. Elektromotor nach Anspruch 1, **dadurch gekennzeichnet, daß** die Formschlußeinheiten (90, 92) derart ausgebildet sind, daß sie durch eine Relativbewegung zueinander in Richtung der Rotorachse (14) in Eingriff miteinander bringbar sind.

3. Elektromotor nach Anspruch 1 oder 2, **dadurch gekennzeichnet, daß** die Formschlußeinheiten (90, 92) derart ausgebildet sind, daß sie durch eine Drehbewegung relativ zueinander um die Rotorachse (14) gegen eine Bewegung in Richtung der Rotorachse (14) relativ zueinander festlegbar sind.

4. Elektromotor nach Anspruch 2 oder 3, **dadurch gekennzeichnet, daß** die Formschlußeinheiten (90, 92) in der Art eines Bajonettverschlusses zusammenwirken.

5. Elektromotor nach einem der voranstehenden Ansprüche, **dadurch gekennzeichnet, daß** die einen Formschlußeinheiten (90) durch Bahnfolger (94) und die anderen Formschlußeinheiten (92) durch Führungsbahnen (96, 98) für die Bahnfolger (94) gebildet sind.

6. Elektromotor nach einem der voranstehenden Ansprüche, **dadurch gekennzeichnet, daß** mit den Formschlußeinheiten (90, 92) eine einzige axiale Endposition des Flanschkörpers (46) relativ zum Gehäusekörper (76) festlegbar ist.

7. Elektromotor nach einem der voranstehenden Ansprüche, **dadurch gekennzeichnet, daß** die Formschlußeinheiten (90, 92) derart ausgebildet sind, daß der Flanschkörper (46) in der axialen Endposition ohne Veränderung dieser axialen Endposition relativ zum Gehäusekörper (76) verdrehbar ist.

8. Elektromotor nach einem der voranstehenden Ansprüche, **dadurch gekennzeichnet, daß** der Flanschkörper (46) durch parallel zur Rotorachse (14) wirkende Führungselemente (82, 84) geführt in die axiale Endposition bringbar ist.

9. Elektromotor nach einem der voranstehenden Ansprüche, **dadurch gekennzeichnet, daß** der Flanschkörper (46) in eine Öffnung (74) des Gehäusekörpers (76) einsetzbar ist.

10. Elektromotor nach Anspruch 9, **dadurch gekennzeichnet, daß** eine Mantelfläche (82) des Flanschkörpers (46) und eine dem Flanschkörper (46) zugewandte Innenfläche (84) der Öffnung (74) die Führungselemente bilden.

11. Elektromotor nach Anspruch 9 oder 10, **dadurch gekennzeichnet, daß** die zweiten Formschlußeinheiten (92) an der den Flanschkörper (46) aufnehmenden Öffnung (74) des Gehäusekörpers (76) angeordnet sind.

12. Elektromotor nach Anspruch 11 ,**dadurch gekennzeichnet, daß** die zweiten Formschlußeinheiten (92) im Bereich einer dem eingesetzten Flanschkörper (46) zugewandten Innenfläche (84) der Öffnung (74) im Gehäusekörper (76) angeordnet sind.

13. Elektromotor nach einem der Ansprüche 9 bis 12, **dadurch gekennzeichnet, daß** die ersten Formschlußeinheiten (90) an einer der Öffnung (74) zugewandten Seite (82) des Flanschkörpers (46) angeordnet sind.

14. Elektromotor nach Anspruch 13, **dadurch gekennzeichnet, daß** die ersten Formschlußeinheiten (90) an der Mantelfläche (82) des Flanschkörpers (46) angeordnet sind.

15. Elektromotor nach einem der Ansprüche 9 bis 14, **dadurch gekennzeichnet, daß** die Öffnung (74) eine Zugangsöffnung für einen Innenraum (86) des Gehäusekörpers (76) ist.

16. Elektromotor nach Anspruch 15, **dadurch gekennzeichnet, daß** die Öffnung (74) in dem Gehäusekörper (76) derart dimensioniert ist, daß durch diese der Rotor (12) in das Motorgehäuse (10) einsetzbar ist.

17. Elektromotor nach einem der voranstehenden Ansprüche, **dadurch gekennzeichnet, daß** das zweite Lager (44) über ein federelastisches Element (54) an dem Flanschkörper (46) in axialer Richtung abgestützt ist.

18. Elektromotor nach einem der voranstehenden Ansprüche, **dadurch gekennzeichnet, daß** der Flanschkörper (46) eine Aufnahme (56) für das zweite Lager (44) aufweist, in welcher das zweite Lager (44) in axialer Richtung zur Rotorachse (14) relativ zum Flanschkörper (46) bewegbar ist.

19. Elektromotor nach Anspruch 18, **dadurch gekennzeichnet, daß** die Aufnahme (56) für das zweite Lager (44) als im Flanschkörper (46) vorgesehene Vertiefung (58) ausgebildet ist.

20. Elektromotor nach einem der voranstehenden Ansprüche, **dadurch gekennzeichnet, daß** auf einer dem Rotor (12) zugewandten Seite des Flanschkörpers (46) mindestens ein Drehbewegungen des Rotors (12) erfassender Sensor (120) angeordnet ist.

21. Elektromotor nach Anspruch 20, **dadurch gekennzeichnet, daß** der mindestens eine Sensor als Sensormagneten (26) des Rotors (12) zugewandter Magnetfeldsensor (120) ausgebildet ist.

22. Elektromotor nach Anspruch 20 oder 21, **dadurch gekennzeichnet, daß** auf einer dem Rotor (12) zugewandten Seite des Flanschkörpers (46) eine Sensorplatine (122) mit dem mindestens einen Sensor (120) angeordnet ist.

23. Elektromotor nach Anspruch 22, **dadurch gekennzeichnet, daß** die Sensorplatine (122) mit dem Flanschkörper (46) mitdrehbar ist.

24. Elektromotor nach Anspruch 23, **dadurch gekennzeichnet, daß** die Sensorplatine (122) fest mit dem Flanschkörper (46) verbunden ist.

25. Elektromotor nach Anspruch 23 oder 24, **dadurch gekennzeichnet, daß** die Sensorplatine (122) über Formschlußelemente (126, 128) mit dem Flanschkörper (46) verbunden ist.

26. Elektromotor nach einem der Ansprüche 22 bis 25, **dadurch gekennzeichnet, daß** das zweite Lager (44) auf einer dem Rotor (12) abgewandten Seite der Sensorplatine (122) am Flanschkörper (46) angeordnet ist.

27. Elektromotor nach einem der Ansprüche 22 bis 26, **dadurch gekennzeichnet, daß** ein von der Sensorplatine (122) weg führendes Kabel (132) durch eine Ausnehmung (134) im Flanschkörper (46) geführt ist.

28. Elektromotor nach Anspruch 27, **dadurch gekennzeichnet, daß** die Ausnehmung (134) zu einer Außenseite des Flanschkörpers (46) hin offen ist.

29. Elektromotor nach einem der voranstehenden Ansprüche, **dadurch gekennzeichnet, daß** der Flanschkörper (46) mit dem Gehäusekörper (76) fest verbindbar ist.

30. Elektromotor nach einem der voranstehenden Ansprüche, **dadurch gekennzeichnet, daß** der Gehäusekörper (76) auf einer dem Flanschkörper (46) gegenüberliegenden Seite einen das erste Lager (34) aufnehmenden Lagerflansch (36) aufweist.

31. Elektromotor nach Anspruch 30, **dadurch gekennzeichnet, daß** der Lagerflansch (36) einstückig mit einem Gehäusemantel (64) des Gehäusekörpers (76) verbunden ist.

32. Elektromotor nach einem der voranstehenden Ansprüche, **dadurch gekennzeichnet, daß** der Gehäusekörper (76) aus einer den Stator (62) einbettenden ausgehärteten Masse (65) gebildet ist.
